(19) Europäisches Patentamt / European Patent Office / Office européen des brevets

(11) **EP 2 462 175 B1**

(12) **EUROPEAN PATENT SPECIFICATION**

(45) Date of publication and mention of the grant of the patent:
**12.10.2016   Bulletin 2016/41**

(21) Application number: **10727249.4**

(22) Date of filing: **07.06.2010**

(51) Int Cl.:
*C08F 297/08* (2006.01)   *C08F 110/06* (2006.01)
*C08F 210/06* (2006.01)   *C08F 10/06* (2006.01)
*C08J 5/18* (2006.01)   *B29C 47/00* (2006.01)

(86) International application number:
**PCT/US2010/037567**

(87) International publication number:
**WO 2011/016899 (10.02.2011 Gazette 2011/06)**

(54) **IMPROVED POLYPROPYLENE FOR USE IN BOPP APPLICATIONS**

VERBESSERTES POLYPROPYLEN FÜR BOPP-ANWENDUNGEN

POLYPROPYLÈNE AMÉLIORÉ DESTINÉ À DES APPLICATIONS À ORIENTATION BIAXIALE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.08.2009   US 537466**

(43) Date of publication of application:
**13.06.2012   Bulletin 2012/24**

(73) Proprietor: **Braskem America, Inc.**
**Philadelphia, PA 19103 (US)**

(72) Inventors:
• **KUETTEL, Beth**
  **Lake Jackson**
  **TX 77566 (US)**
• **DAVIDOCK, Drew**
  **Randolph**
  **NJ 07869 (US)**
• **TAU, Li-Min**
  **Lake Jackson**
  **TX 77566 (US)**
• **CUTHBERT, Thomas**
  **Houston**
  **TX 77006 (US)**

(74) Representative: **Strehl Schübel-Hopf & Partner**
**Maximilianstrasse 54**
**80538 München (DE)**

(56) References cited:
**EP-A2- 0 669 371     WO-A1-02/30998**

**Description**

Field of the Invention

The present invention is related to multi-reactor polypropylene with a broad molecular weight distribution and relatively high content of xylene soluble materials. These materials are well suited for biaxially oriented polypropylene applications.

Background and Summary of the Invention

In general, polypropylene resins having relatively broad molecular weight distributions ("MWD") exhibit better performance in biaxially oriented polypropylere ("BOPP") applications, because the high molecular weight fraction of the resins imparts better mechanical strength, creep resistance, etc. to the resins, while the low molecular weight fraction of the resins imparts excellent processability to the resins.

Polypropylenes produced using known high-activity Ziegler-Natta catalysts generally have narrower molecular weight distributions, with MWDs as measured by a rheological method being typically less than 4. To broaden the molecular weight distribution of such polymers, it is known in the art to use multi-stage polymerization processes, wherein the individual polymerization stages produce polymers having different molecular weights. In this way the final polymer product may have a broader MWD overall. In each polymerization stage, it is known that the molecular weight of the polymers can be controlled by using a molecular weight control agent, such as hydrogen gas, by altering polymerization temperature, or by changing external donor.

Such multi-stage polymerization processes typically comprise two or more stages of polymerization, wherein a first stage of polymerization is homopolymerization of propylene or copolymerization of propylene and an alpha-olefin carried out in the presence of a high-activity, highly-stereoselective Ziegler-Natta catalyst and a less amount of hydrogen, to provide a propylene homopolymer or copolymer having larger molecular weight, and a second stage of polymerization is homopolymerization of propylene or copolymerization of propylene and an alpha-olefin carried out in the same reaction zone or in a different reaction zone, in the presence of the resulting polymer from the first stage of polymerization and a larger amount of hydrogen, to provide a propylene homopolymer or copolymer having less molecular weight.

WO 02/30998 A1 is directed to a novel catalyst component, comprising Mg, Ti, halogen and at least two electron donor compounds, one of which is selected from esters of succinic acids, having specific features regarding extractability. Table 3 of this document discloses a number of examples and comparative examples, inter alia two polypropylene polymers having an X. I. (corresponding to a xylene insoluble fraction) of 92,5 and 94% and a P.I. (corresponding to a polydispersity index determined by rheology) of 4.3 and 4.1, respectively.

It is generally accepted in the art, for example as stated in US 6,825,309, that for BOPP applications the resins should also exhibit lower flexural modulus (obtainable by lowering the crystallinity of the polymer) while also retaining a high xylene insolubility. However, while such materials may provide excellent physical properties they cannot be processed at high line speeds. Thus, it is desired to provide resins that have the physical properties making them suitable for BOPP applications, but which can be processed at higher line speeds.

Contrary to conventional understanding, it has now been found that line speeds can be increased if the broad molecular weight polymer materials have a relatively higher amount of xylene solubles, namely of 5-8 percent by weight. Such materials further have an isotacticity of 92.5% (%mm) or less. Finally it is generally preferred that the materials of the present invention have a higher oligomer content.

Detailed Description of the Invention

Test Methods

Unless otherwise indicated, the following properties are determined by the indicated test method throughout this specification.

Melt flow rate for propylene polymers (that is, those polymers comprising greater than 50% by weight of units derived from propylene monomer) is determined according to ASTM D1238, 230°C, 2.16 kg).

Xylene soluble content is determined by a method adapted from ASTM D5492-06. The procedure consists of weighing 4 g of sample and dissolving it in 200 ml o-xylene in a 400 ml flask with 24/40 joint. The flask is connected to a water cooled condenser and the contents are heated to reflux under $N_2$, and then maintained at reflux for an additional 30 minutes. The solution is then cooled in a temperature controlled water bath at 25 °C for a minimum of 45 minutes to allow the crystallization of the xylene insoluble fraction. Once the solution is cooled and the insoluble fraction precipitates from the solution, the separation of the xylene soluble ("XS") fraction from the xylene insoluble ("XI") fraction is achieved by filtering through 25 micron ($\mu$m) filter paper. One hundred ml of the filtrate is collected into a pre-weighed aluminum pan, and the o-xylene is evaporated from this 100 ml of filtrate under a nitrogen stream. Once the solvent is evaporated, the pan and contents are placed in a 100 °C vacuum oven for 30 minutes or until dry. The pan is then allowed to cool to room temperature and weighed. Xylene solubles is calculated as

$$XS(wt\%) = \frac{(m_3 - m_2)*2}{m_1}*100$$

where $m_1$ = original weight of sample used, $m_2$ = weight of empty aluminum pan, $m_3$ = weight of pan + residue.

Tacticity is determined by $^{13}$C NMR. The samples are prepared by adding approximately 2.6g of a 50/50 mixture of tetrachloroethane-$d_2$/orthodichlorobenzene to 0.2g of sample in a 1 ohm NMR tube. Oxygen is removed by placing the open tubes in a nitrogen environment for at least 45 min. The samples are dissolved and homogenized by heating the tube and its contents to 150°C using a heating block and heat gun. Each sample is visually inspected to ensure homogeneity. The data are collected using a Bruker 400 MHz spectro meter or suitable equivalent. The data were acquired using a 2 sec pulse repetition delay, 90 degree flip angles, and inverse gated decoupling with a sample temperature of 125°C. All measurements are made on non-spinning samples in locked mode. Samples are allowed to thermally equilibrate for 15 minutes prior to data acquisition. The $^{13}$C NMR chemical shifts are internally referenced to the mmmm isotactic pentad at 21.90 ppm. Tacticity for PP homopolymers is determined from the PPP methyl region of the $^{13}$C NMR spectrum. 1 Hz line broadening is applied prior to Fourier transforming the data. The integral for the entire region from ≈22.5 to 19 ppm is set to a value of 100. The %mm is thus integrated directly as the region from 22.5 to 21.3 ppm.

Oligomers content is determined using gas chromatography. The polypropylene sample is extracted overnight in a chloroform solution containing n- hexadecane (n-$C_{16}$) as an internal standard. An aliquot of the extract is shaken with methanol and then filtered to remove trace amounts of atactic polypropylene and solid particles. The filtered liquid is then injected onto a fused silica capillary column. Relative amounts of the extracted components having from 12 to 21 carbon atoms, inclusive, are calculated based on the weight of polymer extracted using the internal standard method of quantitation and reported in parts per million based on weight (ppm). The amounts of individual oligomers are then added together to provide a total.

Molecular weight Distribution ("MWD") can be determined by Gel Permeation Chromatography (GPC) Analytical Method and/or a Rheology-based Polydispersity Index method (PDI). It is understood by those skilled in the art that the results from one method are not directly comparable to the results of the other method.

In the Gel Permeation Chromatography (GPC) Analytical Method, the polymers are analyzed by triple detector gel permeation chromatography (GPC) on a Polymer Laboratories PL-GPC-200 series high temperature unit equipped with refractometer detector, light scattering and online viscometer. Four PLgel Mixed A ($20\mu$m) are used. The oven temperature is at 150°C with the autosampler hot and the warm zone at 130°C. The solvent is nitrogen purged 1,2,4-trichlorobenzene (TCB) containing 180 ppm 2,6-di-t-butyl-4-methylphenol (BHT). The flow rate is 1.0 ml/min and the injection size is $200\mu$l. A 2 mg/ml sample concentration is prepared by dissolving the sample in preheated TCB containing 180ppm BHT for 2.5hrs at 160°C with gentle agitation. The molecular weight determination is deduced by using 21 narrow molecular weight distribution polystyrene standards ranging from Mp 580-8,400,000 (Polymer Laboratories). The equivalent polypropylene molecular weights by conventional GPC are calculated by using appropriate Mark-Houwink coefficients for polypropylene. The MWD is defined as Mw/Mn, or the ratio of the weight averaged molecular weight (Mw) versus the number averaged molecular weight (Mn) by conventional GPC. One or two injections were performed per sample.

|  | Mha | MHk |
|---|---|---|
| Polypropylene | 0.725 | -3.721 |
| Polystyrene | 0.702 | -3.900 |

This GPC analytical method (Mw/Mn) is the preferred method for describing the molecular weight distribution.

In the rheological method, the molecular weight distribution is defined as the polydispersity index, or PDI, which is obtained by the equation below:

$$PDI = \frac{10^5 (Pa)}{G_c (Pa)}$$

where $G_c$ is the crossover modulus (where G'=G") obtained from dynamic small amplitude oscillatory shear measurement. The dynamic oscillatory shear measurements were performed at 190°C using 25 mm parallel plates at a gap of 2.0 mm with a strain of 10% under an inert nitrogen atmosphere. The frequency interval was from 300 to 0.03 radians/second. In order to calculate the $G_c$ value, the G' vs. *tan(delta)* data was interpolated using the Akima spline interpolation algorithm (see, Hiroshi Akima. "A new method of interpolation and smooth curve fitting based on local procedures", J. ACM, 17(4), 589-602 (1970)) with the 3rd order piecewise polynomial fits. The calculated G' value at tan*(della)*=1 is taken as the crossover modulus $G_c$.

The present invention relates to multi-reactor homopolymer propylene based compositions having a broad molecular weight distribution with a relatively high amount of xylene soluble material. The compositions have an Mw/Mn of greater than five, but preferably greater than 5.5 and more preferably greater than 6.0, and a xylene soluble content from 5 to 8 percent by weight. Further, they have an isotacticity (%mm) of less than 92.5%.

The molecular weight distribution of the compositions of the present invention may further be characterized in terms of the polydispersity index (PDI) as determined by rheology. It is preferred that the materials of the present invention have a PDI of greater than 4.0, but more preferably greater than 4.3.

The polypropylene compositions of the present invention are homopolymers. For purposes of this invention, the term "homopolymers" includes copolymers of propylene with a minor amount of ethylene or an alpha-olefin having from four to eight carbon atoms. If a copolymer is present, ethylene is the preferred comonomer. The total comonomer content in the final product is preferably such that the portion of the polymer derived from units other than propylene comprises from zero to about 1.5 weight percent, more preferably from zero to 1.0 weight percent, and still more preferably from zero to about 0.7 weight percent. In some applications, it may be preferred that the compositions are characterized by the absence of any comonomer.

Thus, according to the present invention, a polypropylene homopolymer or copolymer having a broad molecular weight distribution (Mw/Mn) and a relatively high amount of xylene solubles is provided. The xylene solubles is in the range of from 5 to 8 percent by weight, preferably in the range of 5.5 to 8 percent, and more preferably in the range of 6.0 to 7.5 weight percent.

Xylene solubles generally comprise atactic polypropylene, oligomers (defined to mean molecules having from 12 to 21 carbon atoms, inclusive), and a non-bonded, amorphous phase which could include isotactic polypropylene having low enough molecular weight such that it does not crystallize. According to the present invention the polypropylene having a broad molecular weight distribution is characterized in terms of lower amounts of its isotacticity. The resins of the present invention have an isotacticity of 92.5 percent by weight or less.

It is also generally preferred that the total oligomer content be at least 200 ppm by weight, but more preferably at least 250 ppm by weight.

It is generally preferred for BOPP applications that the polypropylene polymers of the present invention have an MFR in the range of from 1-4. g/10 min, but more preferably from 2.0 to 3.5.

The polymer compositions of the present invention can be made by any process suitable for making polypropylene compositions having broad molecular weight distributions. Suitable processes to make the polymers of the present invention will be described in detail below with reference to a continuous process comprising two stages of polymerization by way of example, as this is the preferred process. However, it is understood that the principles of the invention are applicable alike to a batch process or a process comprising more than two stages of polymerization.

Any of the high activity, stereoselective Ziegler-Natta catalysts for propylene polymerization known in the art can be used in the process of the invention. Such catalysts are well known in the art and generally comprise reaction products of: (1) an active solid catalyst component (also known as procatalyst or main catalyst), for example, an active titanium-containing solid catalyst component, preferably a solid catalyst component comprising magnesium, titanium, a halogen and an internal electron donor as essential components; (2) an organic aluminum compound as a cocatalyst; and (3) optionally, an external electron donor compound. These catalysts can be used directly or after having been subjected to a prepolymerization.

In general catalysts with higher stereospecificity result in lower xylene solubles. For Ziegler-Natta polypropylene catalysts, the stereospecificity is primarily controlled through the internal donor. Accordingly while any known internal donor may be used as part of the catalyst to make the compounds of the present invention, those which result in lower stereospecificity may be preferred as they tend to produce higher xylene solubles.

As the cocatalyst component of the catalysts, the organic aluminum compounds are preferably alkyl aluminum compounds, and more preferably trialkyl aluminum compounds. Examples include, but are not limited to, trimethyl aluminum, triethyl aluminum, tri-iso-butyl aluminum, triisopropyl aluminum, tri-n-butyl aluminum, tri-n-hexyl aluminum, and tri-n-octyl aluminum. In the process according to the invention, the organic aluminum compounds as the cocatalyst component are used in conventional amounts. For example, the organic aluminum compound(s) is used in such an amount that a ratio of the active titanium-containing solid catalyst component to the organic aluminum compound(s) as the cocatalyst component is in a range of from 1:25 to 1:100, in terms of molar ratio of Ti to Al.

In general, in the process according to the invention, the active solid catalyst component and the organic aluminum compound are added into only the first stage of polymerization, and it is not necessary to add additionally the active solid catalyst component and the organic aluminum compound into the second stage of polymerization. However, adding the active solid catalyst component and the organic aluminum compound into both the two stages of polymerization is within the scope of the invention.

The external electron donor component of the Ziegler-Natta catalysts may be selected from the group consisting of mono- and multi-functional carboxylic acids, carboxylic anhydrides, esters of carboxylic acids, ketones, ethers, alcohols, lactones, organic phosphorus compounds, and organic silicon compounds, with organic silicon compounds being preferred. The main function of the external electron donor component is to enhance stereoselectivity of active sites of the catalysts, with the higher stereospecificity resulting in generally lower xylene solubles.

Preferred organic silicon compounds useful as the external electron donor component have a formula $RnSi(OR')4-n$, in which $0<n\leq3$, R(s) is/are independently alkyl, alkenyl, cycloalkyl, aryl, or haloalkyl, having 1 to 18 carbon atoms, or a halogen or hydrogen, and R'(s) is/are independently alkyl, alkenyl, cycloalkyl, aryl, or haloalkyl, having 1 to 18 carbon atoms. Examples include, but are not limited to, trimethyl methoxy silane, trimethyl ethoxy silane, trimethyl phenoxy silane, dimethyl dimethoxy silane, dimethyl diethoxy silane, methyl tert-butyl dimethoxy silane, isopropyl methyl dimethoxy silane, diphenoxy dimethoxy silane, diphenyl dimethoxy silane, diphenyl diethoxy silane, phenyl trimethoxy silane, phenyl triethoxy silane, vinyl trimethoxy silane, cyclohexyl methyl dimethoxy silane (CHMDMS or "C-Donor"), dicyclopentyl dimethoxy silane, di-isopropyl dimethoxy silane, di-isobutyl dimethoxy silane, 2-ethylpiperidino tert-butyl dimethoxy silane, (1,1,1-trifluoro-2-propyl) 2-ethylpiperidino dimethoxy silane, (1,1,1-trifluoro-2- propyl) methyl dimethoxy silane, and the like. C-Donor is a preferred compound for use as the external donor.

In general, it is known that increasing amounts of external donor present in the polymerization reaction will decrease the amounts of xylene solubles in the resulting polymer. Thus the amount of external donor should be kept at a low enough level such that the resulting polymer has at least 5 weight percent xylene solubles. The exact amount will depend on the particular catalyst system and reactor conditions, but can be easily determined by a person of skill in the art for any given system.

In general, in order to form compositions having a broad molecular weight distribution it is preferred that a multi-stage reaction process be used. It is possible to operate each reactor in a dual (or greater) reactor system under similar conditions, altering the amount of molecular weight control agent (such as hydrogen gas) such that polymer having different molecular weights are produced in each stage. Accordingly, the first and second stages of polymerization may be performed under different concentrations of a molecular weight control agent, in order to make the final propylene polymers having broadened molecular weight distribution.

In general, melt flow rate (MFR) of a final polymer may be controlled depending on the intended use of the polymer, and the MFR of the propylene polymer produced in the first polymerization stage can be so controlled that a ratio of the MFR of the final propylene polymer to the MFR of the propylene polymer produced in the first polymerization stage is in a range of from about 1 to about 20. For example, when the final polymer will be used as a pipe material, the MFR of the propylene polymer produced in the first polymerization stage can be controlled so as to be in a range of from 0.01 to 0.03 g/10min., and the MFR of the final propylene polymer can be controlled as being in a range of from 0.1 to 0.3 g/10min. When the final polymer will be used as a BOPP film material, the MFR of the propylene polymer produced in the first polymerization stage can be controlled so as to be in a range of from 0.2 to 1.0 g/10min., and the MFR of the final propylene polymer can be controlled as being in a range of from 1 to 4 g/10min, or more preferably 2 to 3.5 g/10 min. All else being equal, a polymer having a higher MFR will tend to result in a polymer having slightly higher xylene soluble content, but the trend is usually not strong enough to override the indicated MFR as dictated by the intended application.

In a two reactor process, the ratio of the output of the first stage of polymerization to the output of the second stage of polymerization may be in a range of from 30:70 to 70:30, preferably from 40:60 to 60:40.

The polymerization can be carried out in a liquid phase process, or in a gas phase process, or in a combination process of gas phase and liquid phase. In the case where the polymerization is carried out in liquid phase, polymerization temperature is in a range of from 0°C to 150°C, and preferably from 40°C to 100°C, and polymerization pressure is higher than saturated vapor pressure of propylene at the corresponding polymerization temperature. Lower temperatures tend to result in polymers having higher xylene soluble content. In the case where the polymerization is carried out in gas phase, polymerization temperature is in a range of from 0°C to 150°C, and preferably from 40°C to 100°C. Lower temperatures tend to result in polymers having higher xylene soluble content.

Polymerization pressure may be normal pressure or higher, and preferably in a range of from 1.0 to 5.0 MPa (gauge).

In addition, the polypropylene resin may or may not contain additives including, but not limited to primary antioxidants, secondary antioxidants, acid neutralizer, anti-block, slip agents, UV stabilizers, and the like.

The polypropylene resins of the present invention are particularly well suited for use in BOPP films. Such films may be monolayer films or multilayer films where the polypropylene materials of the present invention serve as a skin layer, core layer, or both in a multilayer film. It is also contemplated that the material of the present invention can be used in blown film, sheet, foam, thermoforming, extruded profiles, blow-molding, pipe, ISBM or fiber applications.

Specifically, the present invention is directed to an improved method for producing biaxially oriented polypropylene film comprising

a. selecting a multi-reactor homopolymer propylene based polymer having a Mw/Mn greater than 5 and having a xylene soluble content of from 5 to 8 percent by weight;
b. extruding the propylene based polymer into a flat sheet
c. forming a film using a tenter biaxially oriented film process.

In this method, it is specifically preferred that the tenter biaxially oriented film process is operated at a line speed of at least 400 m/min.

It is further preferred that in this method, the polymer comprises from 0 to 1.5 percent by weight of units derived from ethylene, or an isotacticity (%mm) less than 92.5%. The xylene soluble content of the polymer in this method is preferably from 5,5 to 8.0 % by weight, more preferably from 6.0 to 7.5 % by weight, and the Mw/Mn of the polymer is preferably greater than 5.5, more preferably greater than 6.0. In a specific embodiment, the polymer in this method comprises from 0 to 1.5 % by weight of units derived from an alpha olefin other than propylene, e.g. from ethylene. If the alpha olefin other than propylene is ethylene, ethylene is specifically preferred to be present in an amount of from 0 to 1.0 % by weight, and even more preferred in an amount of from 0 to 0.7 % by weight. The melt flow of the polymer in this method is preferably in the range of 1.0 to 4.0 g/10 min, determined according to ASTM D1238, 230°C, 2,16 kg.

EXAMPLES

In order to demonstrate the invention a series of homopolymer polypropylene materials was used to produce films on a biaxially oriented polypropylene production line. The materials used are described in Table 1. The unoriented sheet is extruded from a flat sheet extrusion die with a die gap of 1.5 mm to 3mm onto a chill roll. Downstream, the sheet is reheated to 125°C then passed between closely spaced differential speed rolls to achieve MD orientation with restrained width. The lengthened and thinned sheet is cooled and passed to the tenter section of the line. At this point the edges of the sheet are grasped by mechanical clips on continuous chains and pulled into a long hot air oven kept at a temperature of ≈160 °C. The film is cooled, the clips are released and the film is then fed to a winder. The winder speed is increased until web breaks are observed or the winder reached a speed of 400 m/min or greater. The speed at which web breaks was observed is reported in Table 1, with the notation ">400" indicating that no web breaks were observed.

Table I

| Example | #of reaction stages | MFR (g/10min) | Xylene soluble (wt %) | Oligomers sum (ppm) | PDI (from rheology) | Mw/Mn (GPC) | Isotacticity (%mm) | BOPP line speed (m/min) |
|---|---|---|---|---|---|---|---|---|
| 1 (comp) | Unk. | 2.4 | 2.8 | 1814 | 4.95 | Unk. | Unk. | 250 |
| 2 (comp) | 1 | 2.8 | 3.1 | 961 | 5.15 | Unk. | Unk. | 250 to 300 |
| 3 (comp) | Unk | 2.9 | 4.5 | 211 | 3.6 | Unk. | Unk. | 250 to 300 |
| 4 (comp) | Unk | 3.3 | 6.8 | 120 | 3.96 | Unk. | Unk. | 300 to 400 |
| 5 (comp) | 2 | 2 | 4.65 | 228 | 4.60 | 6.46 | 92.75 | 300 to 400 |
| 6[2](comp) | 1 | 2.8 | 5.05 | 161 | 4.22 | 6.55 | 92.5 | >400 |
| 7[1] | 2 | 2.8 | 6.01 | 267 | 4.37 | 6.32 | 91.83 | >400 |
| 1- average of 3 replicates; 2- average of 2 replicates; | | | | | | | | |

Embodiments

1. An improved method for producing biaxially oriented polypropylene film comprising

a. selecting a multi-reactor homopolymer propylene based polymer having a Mw/Mn greater than 5 and having a xylene soluble content of from 5 to 8 percent by weight;

b. extruding the propylene based polymer into a flat sheet

c. forming a film using a tenter biaxially oriented film process.

2. The method of embodiment 1 characterized in that the tenter biaxially oriented film process is operated at a line speed of at least 400 m/min.

3. The method of embodiment 1 where the polymer comprises from 0 to 1.5 percent by weight of units derived from ethylene.

4. The method of embodiment 1, wherein the polymer has an isotacticity (%mm) less than 92.5%.

5. The method of embodiment 1, wherein the xylene soluble content of the polymer is from 5.5 to 8.0 percent by weight, preferably from 6.0 to 7.5 percent by weight.

6. The method of embodiment 1, wherein the Mw/Mn of the polymer is greater than 5.5, preferably greater than 6.0.

7. The method of embodiment 1, wherein the polymer comprises from 0 to 1.5 percent by weight of units derived from an alpha olefin other than propylene.

8. The method of embodiment 1, wherein the polymer comprises from 0 to 1.5 percent by weight of units derived from ethylene, preferably from 0 to 1.0 percent by weight of units derived from ethylene and more preferably from 0 to 0.7 percent by weight of units derived from ethylene.

9. The method of embodiment 1, wherein the polymer is further characterized by having a melt flow rate as determined according to ASTM D1238, 230°C, 2.16 kg of 1.0 to 4.0g/10 min.

10. A multi-reactor homopolymer propylene based polymer having an Mw/Mn greater than 5, a xylene soluble content from 5 to 8 percent by weight and an isotacticity (%mm) less than 92.5%.

11. The polymer of embodiment 10 wherein the xylene soluble content is from 5.5 to 8.0 percent by weight, preferably from 6.0 to 7.5 percent by weight.

12. The polymer of embodiment 10 wherein the Mw/Mn is greater than 5.5, preferably greater than 6.0.

13. The polymer of embodiment 10 wherein the polymer comprises from 0 to 1.5 percent by weight of units derived from an alpha olefin other than propylene.

14. The polymer of embodiment 10 wherein the polymer comprises from 0 to 1.5 percent by weight of units derived from ethylene, preferably from 0 to 1.0 percent by weight of units derived from ethylene and more preferably from 0 to 0.7 percent by weight of units derived from ethylene.

15. The polymer of embodiment 10 wherein the polymer is further characterized by having a melt flow rate as determined according to ASTM 01238, 230°C, 2.16 kg of 1.0 to 4.0g/10min.

**Claims**

1.  An improved method for producing biaxially oriented polypropylene film comprising

    a. selecting a multi-reactor homopolymer propylene based polymer having a Mw/Mn greater than 5 and having a xylene soluble content of from 5 to 8 percent by weight;
    b. extruding the propylene based polymer into a flat sheet
    c. forming a film using a tenter biaxially oriented film process.

2.  The method of claim 1 **characterized in that** the tenter biaxially oriented film process is operated at a line speed of at least 400 m/min.

3. The method of claim 1 where the polymer comprises from 0 to 1.5 percent by weight of units derived from ethylene.

4. The method of claim 1, wherein the polymer has an isotacticity (%mm) less than 92.5%.

5. The method of claim 1, wherein the xylene soluble content of the polymer is from 5.5 to 8.0 percent by weight, preferably from 6.0 to 7.5 percent by weight.

6. The method of claim 1, wherein the Mw/Mn of the polymer is greater than 5.5, preferably greater than 6.0.

7. The method of claim 1, wherein the polymer comprises from 0 to 1.5 percent by weight of units derived from an alpha olefin other than propylene.

8. The method of claim 1, wherein the polymer comprises from 0 to 1.5 percent by weight of units derived from ethylene, preferably from 0 to 1.0 percent by weight of units derived from ethylene and more preferably from 0 to 0.7 percent by weight of units derived from ethylene.

9. The method of claim 1, wherein the polymer is further **characterized by** having a melt flow rate as determined according to ASTM D1238, 230°C, 2.16 kg of 1.0 to 4.0g/10min.

10. A multi-reactor homopolymer propylene based polymer having an Mw/Mn greater than 5, a xylene soluble content from 5 to 8 percent by weight and an isotacticity (%mm) less than 92.5%.

11. The polymer of claim 10 wherein the xylene soluble content is from 5.5 to 8.0 percent by weight, preferably from 6.0 to 7.5 percent by weight.

12. The polymer of claim 10 wherein the Mw/Mn is greater than 5.5, preferably greater than 6.0.

13. The polymer of claim 10 wherein the polymer comprises from 0 to 1.5 percent by weight of units derived from an alpha olefin other than propylene.

14. The polymer of claim 10 wherein the polymer comprises from 0 to 1.5 percent by weight of units derived from ethylene, preferably from 0 to 1.0 percent by weight of units derived from ethylene and more preferably from 0 to 0.7 percent by weight of units derived from ethylene.

15. The polymer of claim 10 wherein the polymer is further **characterized by** having a melt flow rate as determined according to ASTM D1238, 230°C, 2.16 kg of 1.0 to 4.0g/10min.

**Patentansprüche**

1. Verbessertes Verfahren zum Herstellen einer biaxial orientierten Polypropylenfolie, welches

   a. das Auswählen eines Polymers auf Grundlage eines homopolymeren Mehrreaktor-Propylens mit einem Mw/Mn von mehr als 5 und einem Gehalt an Xylol-löslichem Material von 5 bis 8 Gew.-%;
   b. das Extrudieren des Polymers auf Grundlage von Propylen in einen flachen Bogen;
   c. das Bilden einer Folie unter Einsatz eines Verfahrens zum Erzeugen einer biaxial orientierten Folie unter Verwendung eines Spannrahmens umfasst.

2. Verfahren nach Anspruch 1, **dadurch gekennzeichnet, dass** das Verfahren zum Erzeugen einer biaxial orientierten Folie unter Einsatz eines Spannrahmens bei einer Streckengeschwindigkeit von mindestens 400 m/min. durchgeführt wird.

3. Verfahren nach Anspruch 1, wobei das Polymer 0 bis 1,5 Gew.-% Einheiten umfasst, die von Ethylen abgeleitet sind.

4. Verfahren nach Anspruch 1, wobei das Polymer eine Isotaktizität (%mm) von weniger als 92,5 % aufweist.

**5.** Verfahren nach Anspruch 1, wobei der Gehalt an Xylol-löslichem Material des Polymers 5,5 bis 8,0 Gew.-%, vorzugsweise 6,0 bis 7,5 Gew.-% ist.

**6.** Verfahren nach Anspruch 1, wobei das Mw/Mn des Polymers höher als 5,5, vorzugsweise höher als 6,0 ist.

**7.** Verfahren nach Anspruch 1, wobei das Polymer 0 bis 1,5 Gew.-% Einheiten enthält, die von einem anderen $\alpha$-Olefin als Propylen abgeleitet sind.

**8.** Verfahren nach Anspruch 1, wobei das Polymer 0 bis 1,5 Gew.-% Einheiten, die von Ethylen abgeleitet sind, vorzugsweise 0 bis 1,0 Gew.-% Einheiten, die von Ethylen abgeleitet sind, und stärker bevorzugt 0 bis 0,7 Gew.-% Einheiten enthält, die von Ethylen abgeleitet sind.

**9.** Verfahren nach Anspruch 1, wobei das Polymer außerdem **dadurch gekennzeichnet ist, dass** es eine Schmelzflussrate, bestimmt nach ASTM D1238, 230°C, 2,16 kg, von 1,0 bis 4,0 g/10 min. aufweist.

**10.** Polymer auf Grundlage eines homopolymeren Mehrreaktor-Propylens mit einem Mw/Mn von höher als 5, einem Gehalt an Xylol-löslichem Material von 5 bis 8 Gew.-% und einer Isotaktizität (%mm) von weniger als 92,5 %.

**11.** Polymer nach Anspruch 10, wobei der Gehalt an Xylol-löslichem Material 5,5 bis 8 Gew.-%, vorzugsweise 6,0 bis 7,5 Gew.-% ist.

**12.** Polymer nach Anspruch 10, wobei Mw/Mn höher als 5,5, vorzugsweise höher als 6,0 ist.

**13.** Polymer nach Anspruch 10, wobei das Polymer 0 bis 1,5 Gew.-% Einheiten enthält, die von einem anderen $\alpha$-Olefin als Propylen abgeleitet sind.

**14.** Polymer nach Anspruch 10, wobei das Polymer 0 bis 1,5 Gew.-% Einheiten, die von Ethylen abgeleitet sind, vorzugsweise 0 bis 1,0 Gew.-% Einheiten, die von Ethylen abgeleitet sind, und stärker bevorzugt 0 bis 0,7 Gew.-% Einheiten, die von Ethylen abgeleitet sind, enthält.

**15.** Polymer nach Anspruch 10, wobei das Polymer außerdem **dadurch gekennzeichnet ist, dass** es eine Schmelzflussrate, bestimmt nach ASTM D1238, 230°C, 2,16 kg, von 1,0 bis 4,0 g/10 min. aufweist.

**Revendications**

**1.** Procédé amélioré de production d'un film de polypropylène à orientation biaxiale comprenant

a. la sélection d'un polymère à base d'homopolymère de propylène multi-réacteur ayant un rapport Mw/Mn supérieur à 5 et ayant une teneur en matériaux solubles dans le xylène de 5 à 8 pour cent en poids ;
b. l'extrusion du polymère à base de propylène sous la forme d'une feuille plane
c. la formation d'un film à l'aide d'un procédé de fabrication de film à orientation biaxiale sur rame.

**2.** Procédé selon la revendication 1 **caractérisé en ce que** le procédé de fabrication de film à orientation biaxiale sur rame fonctionne à un régime de production d'au moins 400 m/min.

**3.** Procédé selon la revendication 1 où le polymère comprend de 0 à 1,5 pour cent en poids d'unités dérivées de l'éthylène.

**4.** Procédé selon la revendication 1, dans lequel le polymère a une isotacticité (% mm) inférieure à 92,5 %.

**5.** Procédé selon la revendication 1, dans lequel la teneur en matériaux solubles dans le xylène du polymère est de 5,5 à 8,0 pour cent en poids, de préférence de 6,0 à 7,5 pour cent en poids.

**6.** Procédé selon la revendication 1, dans lequel le rapport Mw/Mn du polymère est supérieur à 5,5, de préférence supérieur à 6,0.

**7.** Procédé selon la revendication 1, dans lequel le polymère comprend de 0 à 1,5 pour cent en poids d'unités dérivées d'une alpha oléfine autre que le propylène.

8. Procédé selon la revendication 1, dans lequel le polymère comprend de 0 à 1,5 pour cent en poids d'unités dérivées de l'éthylène, de préférence de 0 à 1,0 pour cent en poids d'unités dérivées de l'éthylène et plus préférablement de 0 à 0,7 pour cent en poids d'unités dérivées de l'éthylène.

9. Procédé selon la revendication 1, dans lequel le polymère est en outre **caractérisé par le fait qu'**il a un indice de fluidité à chaud tel que déterminé selon la norme ASTM D1238, 230 °C, 2,16 kg de 1,0 à 4,0 g/10 min.

10. Polymère à base d'homopolymère de propylène multi-réacteur ayant un rapport Mw/Mn supérieur à 5, une teneur en matériaux solubles dans le xylène de 5 à 8 pour cent en poids et une isotacticité (% mm) inférieure à 92,5 %.

11. Polymère selon la revendication 10 dans lequel la teneur en matériaux solubles dans le xylène est de 5,5 à 8,0 pour cent en poids, de préférence de 6,0 à 7,5 pour cent en poids.

12. Polymère selon la revendication 10 dans lequel le rapport Mw/Mn est supérieur à 5,5, de préférence supérieur à 6,0.

13. Polymère selon la revendication 10 dans lequel le polymère comprend de 0 à 1,5 pour cent en poids d'unités dérivées d'une alpha oléfine autre que le propylène.

14. Polymère selon la revendication 10 dans lequel le polymère comprend de 0 à 1,5 pour cent en poids d'unités dérivées de l'éthylène, de préférence de 0 à 1,0 pour cent en poids d'unités dérivées de l'éthylène et plus préférablement de 0 à 0,7 pour cent en poids d'unités dérivées de l'éthylène.

15. Polymère selon la revendication 10 dans lequel le polymère est en outre **caractérisé par le fait qu'**il a un indice de fluidité à chaud tel que déterminé selon la norme ASTM D1238, 230 °C, 2,16 kg de 1,0 à 4,0 g/10 min.

## REFERENCES CITED IN THE DESCRIPTION

**Patent documents cited in the description**

- WO 0230998 A1

- US 6825309 B

**Non-patent literature cited in the description**

- **HIROSHI AKIMA.** A new method of interpolation and smooth curve fitting based on local procedures. *J. ACM,* 1970, vol. 17 (4), 589-602